**Europäisches Patentamt**

**European Patent Office**

**Office européen des brevets**

(19)

(11) Publication number : **0 577 324 A2**

(12)

# EUROPEAN PATENT APPLICATION

(21) Application number : **93304914.0**

(22) Date of filing : **23.06.93**

(51) Int. CI.⁵ : **G06F 15/21**

(30) Priority : **29.06.92 US 905739**

(43) Date of publication of application :
**05.01.94 Bulletin 94/01**

(84) Designated Contracting States :
**AT BE CH DE DK ES FR GB GR IE IT LI LU MC NL PT SE**

(71) Applicant : **Khorshid, Hassan Seif El Din**
**4 Ibn Zinki Str.**
**Zamalek (EG)**

(72) Inventor : **Khorshid, Hassan Seif El Din**
**4 Ibn Zinki Str.**
**Zamalek (EG)**

(74) Representative : **Milhench, Howard Leslie et al**
**R.G.C. Jenkins & Co. 26 Caxton Street**
**London SW1H 0RJ (GB)**

(54) **Systems management processor.**

(57)    A data processing system for establishing a management environment in an organization utilizing the flow of information between a distributed network of discrete response centers. The system permits the creation of a controlling matrix of activity patterns associated with the different functional aspects of an organization such as Policies & Procedures, MIS, Accounting, Costing, etc. that govern the efficient completion of the organization's work flow as embodied in the tasks and operations of its work cycle. The inventive system provides for enhanced productivity through both increased utilization of present resources and more accurate planning techniques for future organization objectives. Activity Management Software expresses and manages the activities of the organization for the purpose of achieving these objectives efficiently and effectively through the development of patterns of activities, optimizing these patterns, best resource usage, control for performance and planning for future improvements.

FIG. 1

The present invention is generally related to a data processing system and methodology for managing the activities of complex organizations. More particularly, the present invention is a computer system programmed to design and implement activity patterns associated with the functional aspects of the organization. The system also allows the management of an organization to simulate different situations in order to decide on a favorable course of action and to forecast future results.

## BACKGROUND OF THE INVENTION

The institutions forming the framework of our society present a myriad of organizational styles and levels of bureaucracy. Large institutions are often heavily ladened with layers of management controlling the underlying activities of those performing the tasks associated with the objectives of a given institution. Smaller institutions lack the complexity associated with layers of management and diverse goals, but share many other common attributes.

No matter what form, an institution is most simply characterized as a group of persons in a defined environment working in concert in pursuit of common objectives. In this context, institutions will encompass the commercial organizations that employ the majority of our population and engage in activities that create goods and services, irrespective of size. Each organization pursues its objectives through the activities of its employees that, taken together, form the work flow of the organization. Controlling the direction of this work flow is the responsibility of the management of the organization.

The management of a typical organization has traditionally developed as an outcome of its growth from a small single task operation to the larger complex institution directed to many tasks necessary for the profitable creation and marketing of its output. The function of management is to effectively allocate the organization's scarce resources for the fulfillment of its mission. Organizational management is a much studied phenomena, and companies that become unprofitable invariably hire teams of consultants to reconfigure management activities.

Indeed, although management theory has matured, it largely remains constrained to specific models governing the activities of specific industries. These models are not universally applicable. For example, past techniques applied to the manufacture and sale of advanced computer systems cannot be easily adapted for use to control a large accounting firm. Moreover, theories of management that are considered generic in scope are often too unwieldy to implement in a particular environment.

In any event, past efforts to implement any management techniques have for the most part excluded the use of computer-aided management on anything but a project scale. For project management, data softwares are little more than scheduling devices to insure that delivery of project inputs are timed to correspond to the completion of other outputs. The narrow focus of these computer-aided project managers offers little to the solution of organizational level management problems. Other efforts to employ computers to support management decisions include systems such as MRS (manufacturing resources systems) and MIS (management information systems); these systems are database tools that provide important information to the management process, but provide no guidance on a fundamental level.

Therefore, management decisions in both large and small companies continue to be accomplished by relying on the intuition and experience of key staff. Although such factors are important in modern management, reliance thereon leaves an organization vulnerable to untimely defection of key staff.

The objective addressed by the present invention is to create an environment wherein the intuition and experience of the organization do not solely reside in one or more key managers, but become part of the fabric of the working environment. This is accomplished by the program controlled data software described hereinbelow.

## SUMMARY AND OBJECTS OF THE PRESENT INVENTION

It is, therefore, an object of the present invention to provide an integrated data software for the enhanced management of an organization, including alternative subpatterns embodied in individual patterns to deal with varying situations without losing the identity of the original patterns.

It is also an object of the present invention to provide a flexible implementation of the activity patterns associated with an organization.

It is a further object of the present invention to provide a pattern design module for creating the activity patterns characterizing the operation of an organization.

It is yet another object of the present invention to provide a learning module wherein organizational experience with an established activity pattern is collected and analyzed permitting pattern modification and improvement.

The above and other objects of the present invention are realized in a specific illustrative data processing system that includes the work patterns associated with the work flow of an organization. These work patterns are expressed in terms of parameters delineated in "agents", "tasks", "operations", linking Input or output factors (hereinafter referred to as "I/O" or "phi"; the letter phi from the greek alphabet is a symbolic representation of an "I" superimposed on an "O") and "resources". In this context, the work flow of an organization is broken up into its constituent parts and expressed as a concatenation of tasks and operations, completed by agents, consuming resources and linked by logical I/O ("Input/Output"). These activity patterns form the overall work flow in accordance with the organization's objectives, as expressed in its work cycles.

The management of these activity patterns is controlled through the use of the "management module". This module tracks all the various programmed patterns for the completion of the organization's objectives. The various resources are allocated to the activity patterns to generate "jobs", which consist of tasks and operations. The jobs are also represented by the system. Through the management module, every job is initiated and its completion is collated and monitored until the work cycle is complete.

In accordance with the varying aspects of the present invention, the system further provides the ability to collect and analyze past performance under a previously established set of activity patterns. As a generation of pattern completion is stored, it is also available as a database tool for forecasting future work, and planning for expansions, etc. In this manner, the system becomes a fluid collection of tasks and operations continually being updated and enhanced pursuant to the latest collected performance records. These records support the allocation of scarce resources to organization divisions offering the greatest returns of the organization's capital. The system maps the hardware to the response centers of the activity patterns to ensure the optimization of the hardware to serve the organization goals.

The foregoing features of the present invention may be more fully appreciated in reference to a detailed description of a specific illustrative example thereof, taken in conjunction with the following drawings.

## BRIEF DESCRIPTION OF THE DRAWINGS

Figure 1 provides a diagram of the role of activity pattern management on a typical organization;

Figure 2 provides a logic flowchart for pattern analysis and design;

Figure 3 provides a simplified diagram of an activity pattern including the constituents to the pattern as employed in the present invention;

Figure 4 provides an exemplary work pattern, including subpattern, for a Sales Order Work Cycle;

Figure 5 provides an exemplary work subpattern depicting the elements for shipping a package by air;

Figure 6 provides an exemplary work subpattern depicting the elements for land shipping;

Figure 7 provides a logic flowchart depicting the process of implementing patterns as "jobs" in organization management;

Figure 8 provides a diagram reflecting the process for management involvement in pattern assessment; and

Figure 9 provides a diagram reflecting the process for management involvement in pattern utilization for forecasting.

## DESCRIPTION OF THE PRESENT INVENTION

First, briefly in overview, the present invention is directed to the creation of a computer facilitated working environment based on a collection of pre-established activities of tasks and operations that are linked by input-output (phi) into patterns so that organization work cycles are efficiently pursued. In addition, the system uses historical pattern records to help modify the use of future patterns and also permit more accurate and broader scope forecasting of future work.

These system capabilities are possible through the implementation of Activity Management Methodology ("AMM") on a computer system. This methodology is based primarily on the recognition that all the work undertaken by modern organizations can be universally represented by a set of parameters. These parameters take values which differ from one organization to another. Once these parameters are identified, they provide the building blocks to create the patterns of activity that collectively form the operative output of an organization. Although each respective organization will be characterized by a diverse set of patterns, these patterns can be universally expressed in terms of tasks, operations, agents, resources, work units and linking criteria. Implementation of the system can be on one of many available computer and network systems.

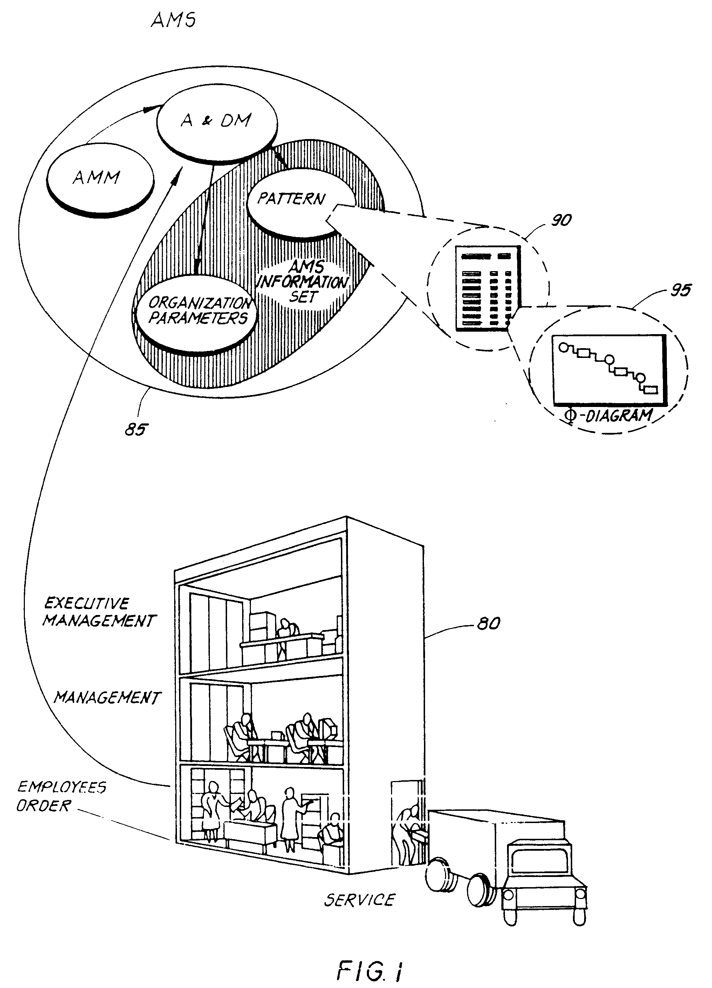

The first module to the present invention is directed to the creation of the controlling activity patterns that, upon implementation, will direct the operation of the organization. This is accomplished by collecting the data from the practices of an existing operation and entering this data into a pre-established matrix. This is exemplified in Figure 1. In this diagram, the typical organization 80 is shown as a tri-level hierarchy, with tasks and operations performed on the lowest work level, mid-management activities on the second level and executive management on the top (third) level. In this diagram (area 85), the system is programmed to store the characteristics of work units performed at the worker level and the attributes for the remainder of the organization, which are thereafter used to build activity patterns linking the different operations in the organization.

The data collected on the present practices is organized into a database that is called the activity management information set (AMIS). In this context, the AMIS is a continually changing set of data, reflecting adjustments made to work cycles. For optimal utilization, the AMIS establishes consistent internal variables, quantifying all the salient elements for a given organization.

As presented in Fig. 1, the AMIS is the compilation of activity patterns (90) depicted in 95 using the currently practiced organization parameters. These organization parameters include the name and title of the workers, the organization chart, system calendars, chart of accounts, financial value codes, and other defining terms. For example, financial value codes would include the cost of goods sold and sales order value. In addition, the organization parameters include operation and tasks, inputs and outputs for these tasks, agents, resources, and common elements of delay. A cross section of parameters is presented in Table I below:

## TABLE I

### Sample Parameters

| | |
|---|---|
| Organization Chart | reporting arrangement of personnel |
| Job Titles | description of duties, skill level and associated costs |
| Employee List | schedule of personnel and biographical data |
| Chart of Accounts | codes for financial simulation |
| Financial Value Codes | financial valuation of activity |
| Response Center | combination of at least work unit and type of agent performing the work unit. It may also contain parameters such as resources, duration and cost |
| Tasks | component activity for a department, for instance of a work cycle for a department |
| Operations | component activity of a task (i.e., a subtask) |

| Input/Output (phi) | information representing inputs and outputs needed for (1) the work to be performed in the response center, and (2) the results of the work performed in the response center |
|---|---|
| Nexus | connects response centers. In particular, a nexus element ties together in a precedence order two response centers: one generates a phi which is received by the other; or equivalently, one receives a phi which is generated by the other. |
| Resources | all what a work unit needs to do the job, such as raw materials, machine, etc. |
| Delay Reasons | library of common problems preventing timely completion of activity |

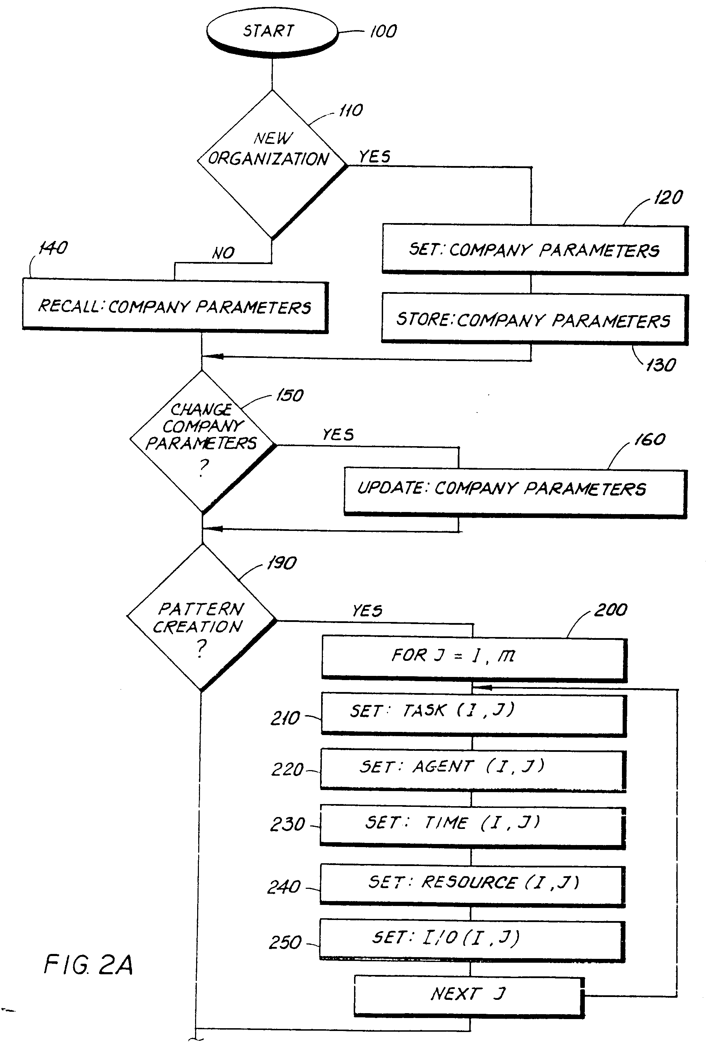

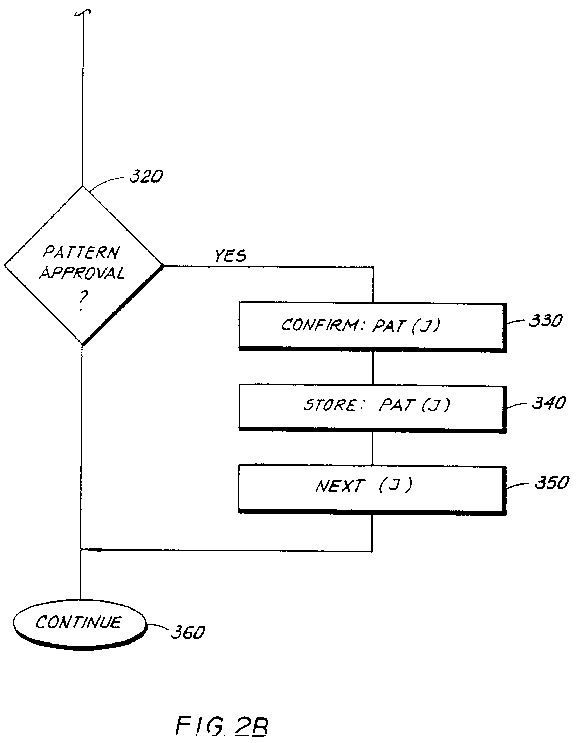

The process for creating the original set of patterns for implementation in the data software is shown in logic flowchart form in Figure 2. Starting at Start block 100, logic continues to test 110 to determine whether entries are for a new organization or an existing file. A positive response to test 110 provides for the entry of a new AMIS file via blocks 120 and 130; otherwise an existing file is pulled from memory, block 140, for the construction of the controlling matrix of parameters.

At test 150, the file entries for AMIS can be modified. In this context, the parameters outlined above will have some overlap and interrelationship, optimally represented in partial matrix format. If selected, logic branches to block 160 and an update of the parameters is carried out.

The selected parameters are then organized into patterns of activities through the for-next loop starting at block 200. More particularly, a positive response to test 190 branches logic to block 200 and the iterative process of entering the parameters associated with work units and linking these parameters via I/O connectors to other work unit parameters forming the designated activity pattern, Pat(J). In this context, the task is set at block 210, the agents needed for the work unit are entered at block 220, the time for completion is set at block 230, the resources for that activity are entered at block 240, and the I/O connection between each activity is set at block 250. This is repeated for each activity for the Jth pattern, block 260.

Continuing with Figure 2, logic proceeds to test 320 for pattern approval. A positive response to this test permits system confirmation of the salient pattern, block 330 and storage of the pattern within the system command matrix (control room), block 340. This is repeated for all Jth patterns to preset limit, M, via next command block 350, resulting in the control room matrix of activity patterns for that organization.

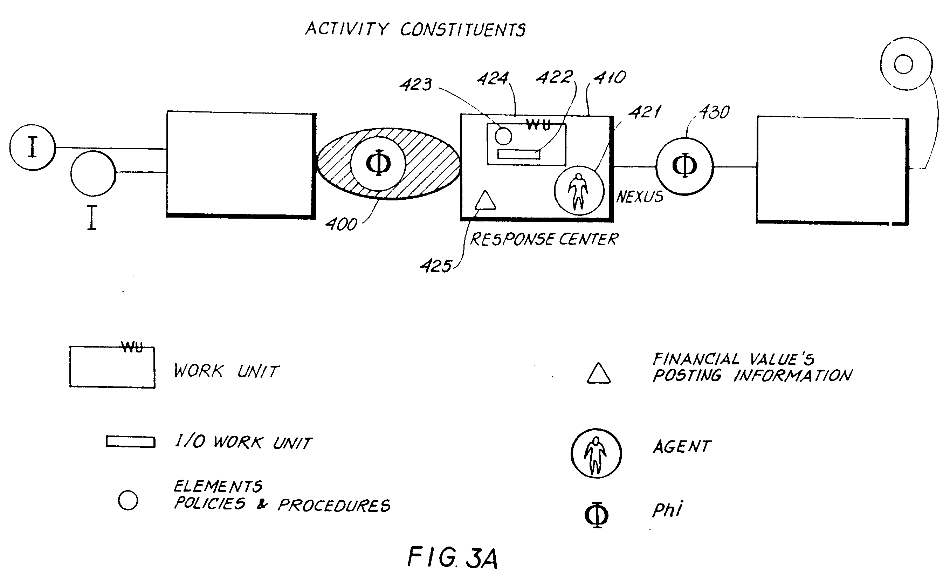

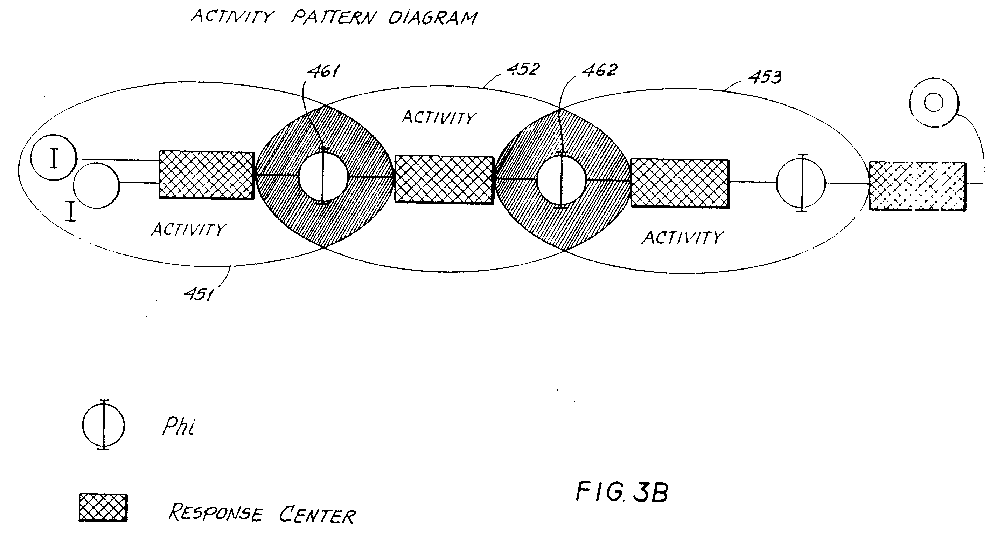

Turning now to Figure 3, the elements forming a generic activity are graphically presented in Figure 3A. In this diagram, the activity is represented by an incoming phi (I/O) 400, a response center for that phi 410 and the outgoing phi 430. The phi values include the communications to the preceding and following tasks and the requisite inputs for completing the activity. The response center further comprises one or more agents 421, I/0 work units 422, policy statements 423, tasks 424, and financial posting information 425. The response center forms the operative environment for completing the tasks associated with the activity.

In Figure 3B, the arrangements of activities within the pattern are graphically presented. The string of activities 451-453 (and specifically their respective response centers) are linked by bridging phi's 461 and 462 forming the logical progression of activities making up the pattern associated with that work cycle.

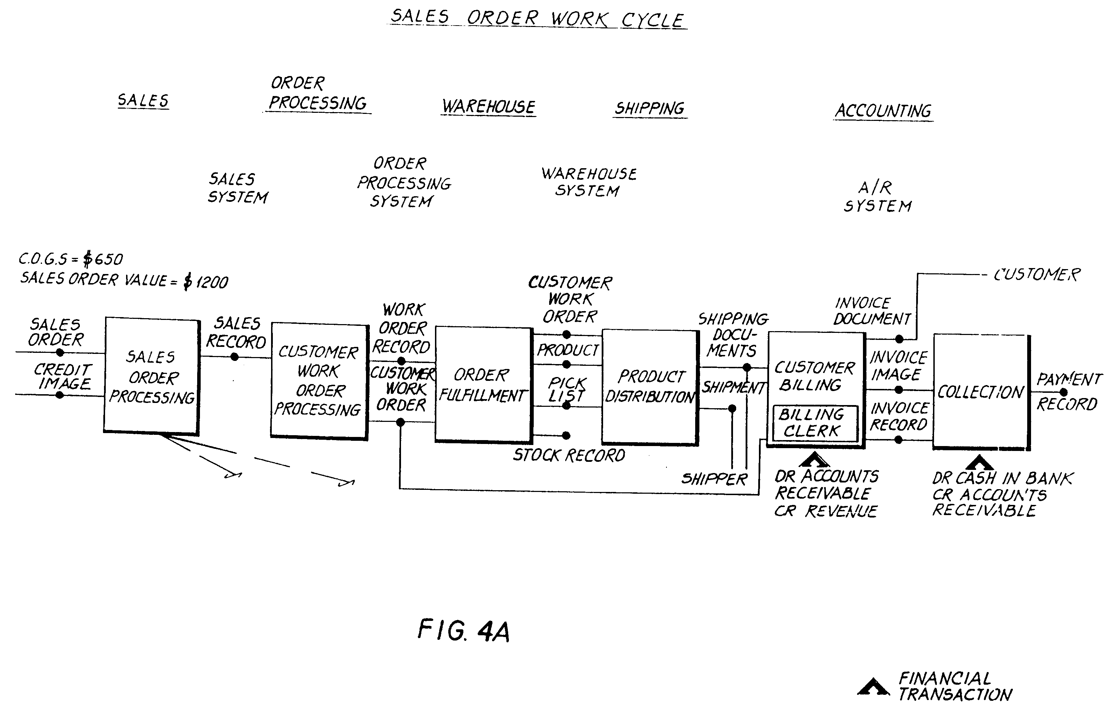

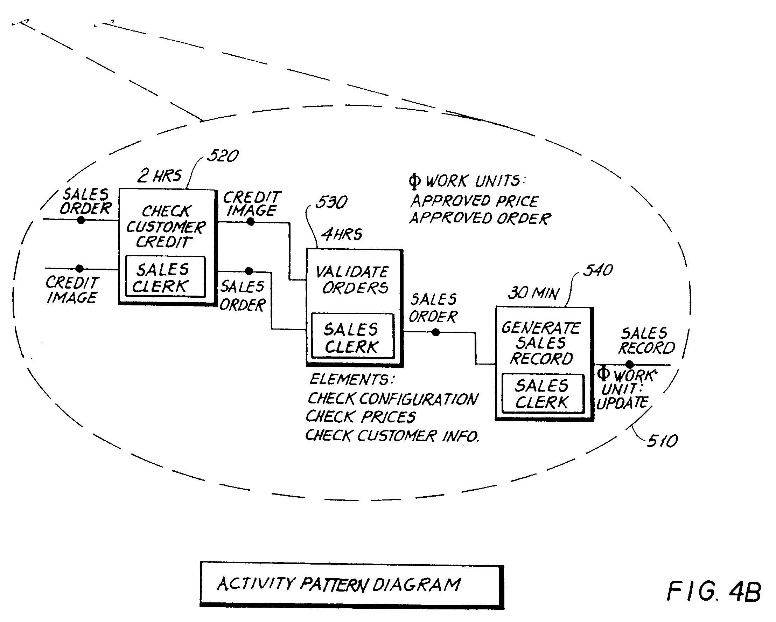

The foregoing concepts may be better understood in the context of a specific example. In Figure 4, the work cycle for sales order processing is depicted in block diagram form. As arranged therein, this work cycle corresponds to six concatenated activities in one pattern and delineated in the areas of sales, order processing, warehouse, shipping and accounting. The rectangular boxes represent the response center for each activity.

As shown therein, the response centers may further comprise several distinct tasks for that activity. This is reflected in the exploded view of Sales Order Processing 510, which is further broken into tasks associated with checking customer credit 520, validate orders 530, and generate sales records 540. As can be seen, each task has its own I/O (phi) values which when combined form the aggregated phi for that activity. Moreover, each task includes all the elements of the response center which may include work by one or more individuals, and involve output (and forming input) to succeeding tasks and activities.

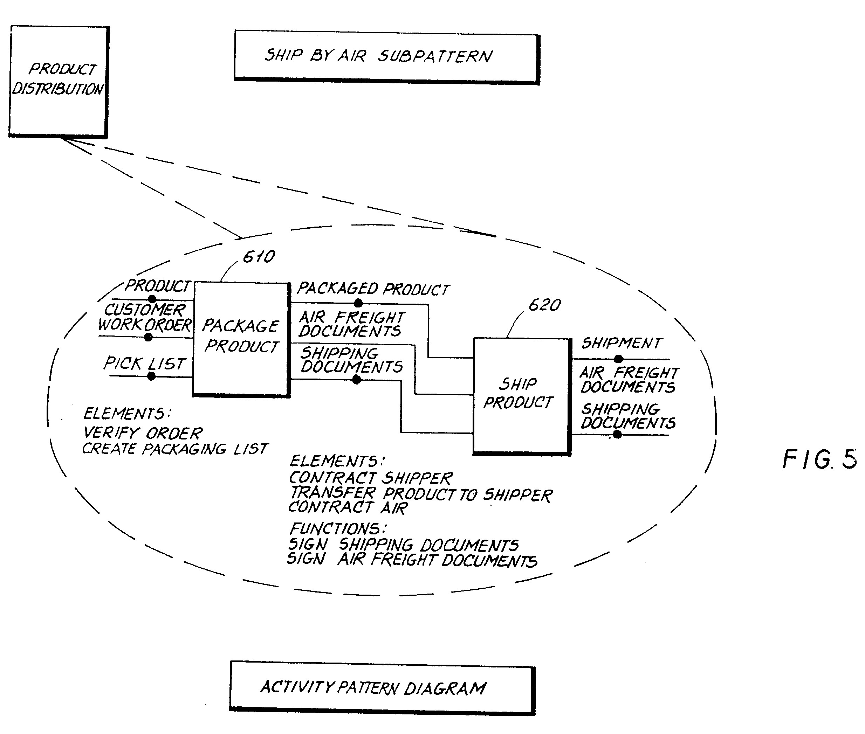

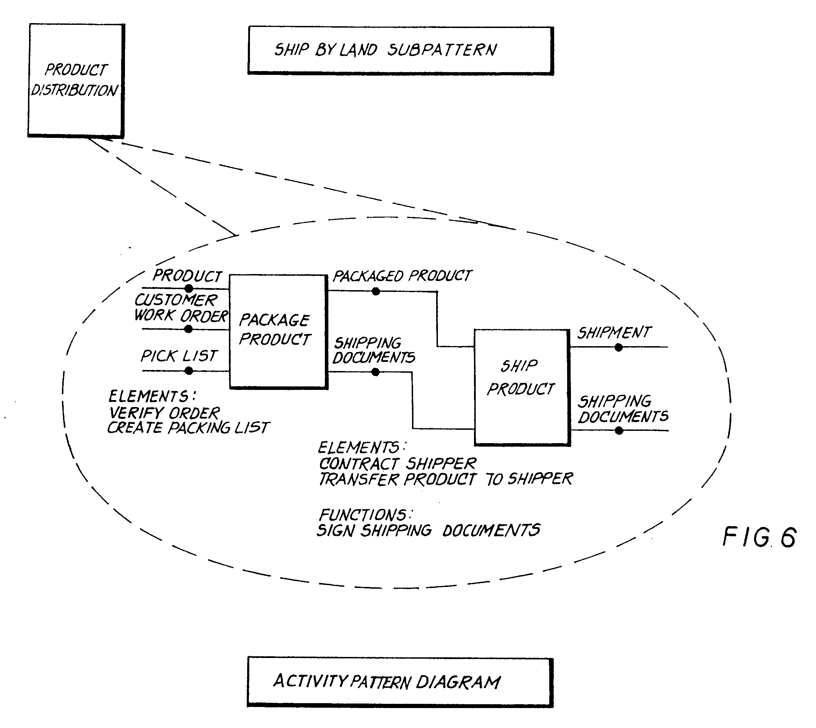

The system is not limited to a particular scope of activity and permits the use of nested subpatterns to be affiliated with a particular pattern. This is exemplified in Figures 5 and 6, wherein the response center for "Product Distribution" involves the ship by air subpattern made up of the operations of packaging the product 610 and product shipment 620. The operations for this subpattern are connected via the phi's indicated in Figure 5, e.g., customer work order, air freight documents, and shipping documents.

Alternatively, the Product Distribution response center can direct the activity for ship by land. This arrangement of operations is depicted in Figure 6. In this process, separate and less complex phi's are involved; this may offer potential cost savings with this approach from an organizational perspective.

The preceding account of pattern creation describes the full detail and process for building structured activity patterns, that is, patterns for work cycles that have a constant number of tasks and operations performed in a necessary sequence. These patterns are "structured" because they represent the structured policies and procedures of the organization.

The system can also create semi-structured patterns. These are for work cycles that by nature do not consist of a constant number of operations done in a necessary sequence. Rather, some of their tasks or operations may have a place in a logical sequence, but others among their operations may be optional or may be performed more than once.

An example is a sales cycle for a computer system (or some other technologically sophisticated, expensive product). Such a cycle might have, at least, two fixed operations. These are submitting a sales proposal and signing a contract, in this sequence.

However, there may be many tasks or operations in a sales cycle, such as meeting the customer, making a presentation, or even writing a sales proposal, that may be optional or performed more than once. Furthermore, there is no one necessary sequence of work units between the two fixed points, submitting a sales proposal and signing the contract.

Nonetheless, the system can create a semi-structured activity pattern for work cycles such as this one. These patterns contain all information relevant to each operation. These patterns, like the structured patterns, are used to control actual work cycles during operations. They provide the employee with a guide to the work he should perform. They permit an employee to report on what work he has performed and his manager to monitor his performance (and to see what he has and has not done).

An activity engineer may also create patterns to be used for planning alone. These patterns require less detail than those patterns used during operations. However, the planning patterns need to contain the information necessary for planning; standard durations, resource usage, and financial values. Activity patterns created for daily operations can also be used for planning.

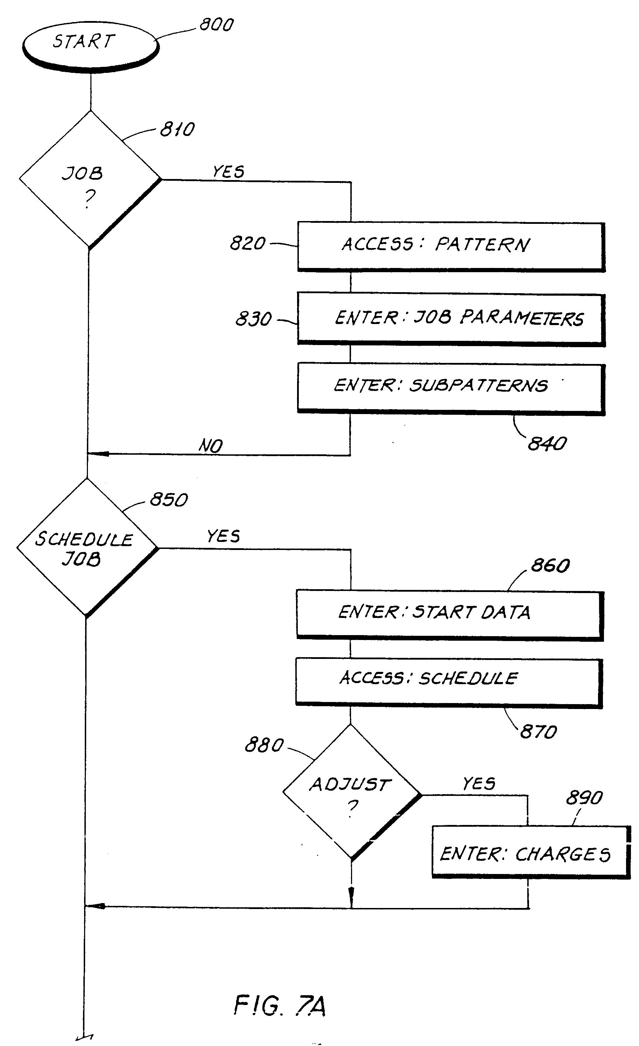

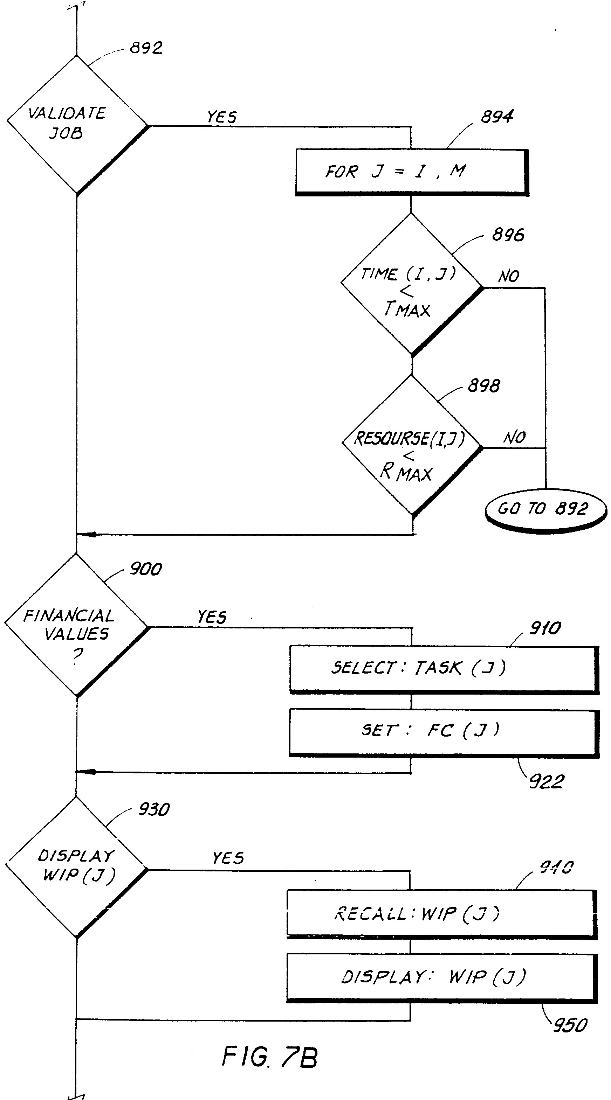

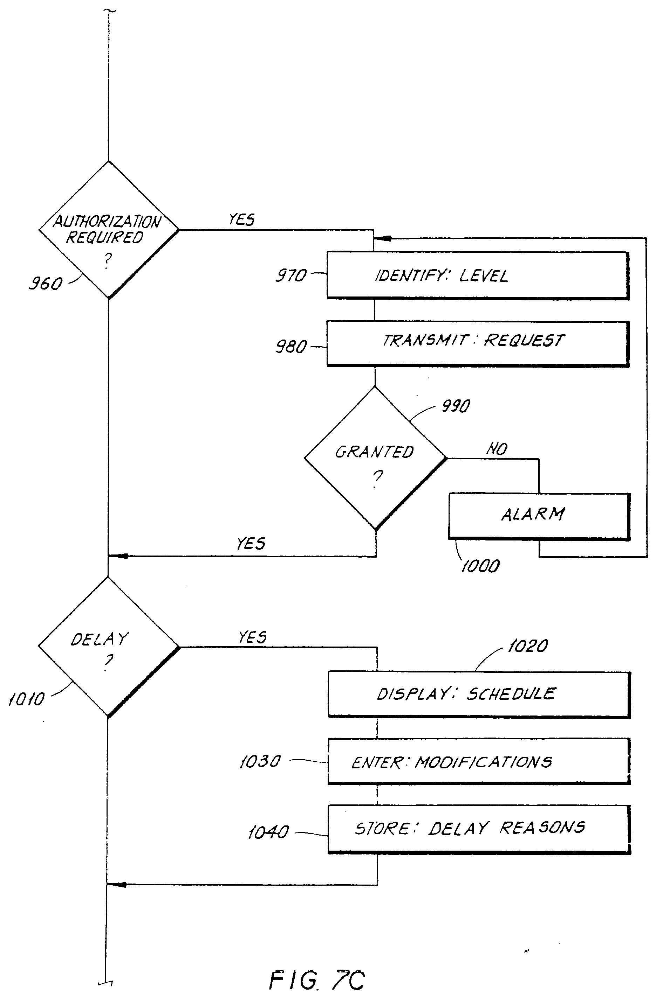

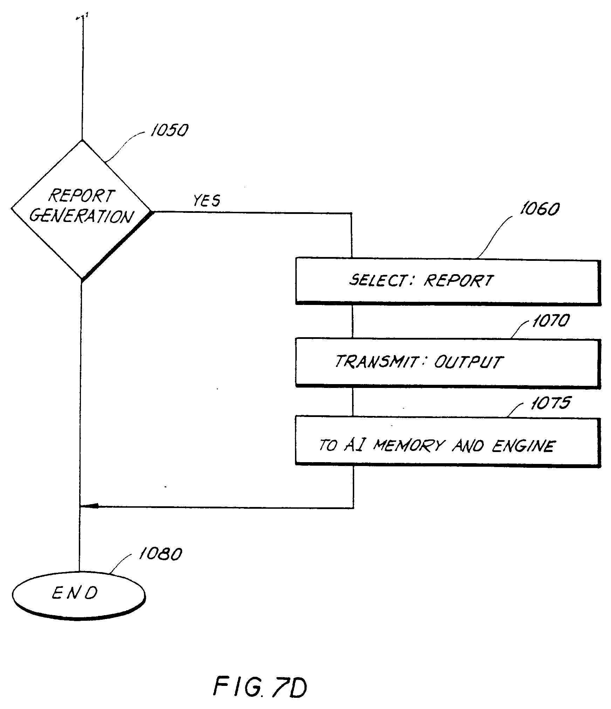

The second module of the present invention involves the management implementation of the patterned activities pursuant to the dictates of the work cycle of the organization. The implementation of an activity pattern is called a "job" and is initiated by a manager through the subroutines delineated in Figure 7. It should be noted that the system will provide the manager with a menu of functions distinct from the menu of functions available to the workers.

More specifically, logic begins a start block 800 and continues to test 810 wherein a positive response branches logic to blocks 820-840. In this loop, a pattern is accessed for characterizing the selected job, and parameters for that pattern are entered - if further definition is required, the job is also cast in subpatterns. Note that a subpattern can be included at different points of work progression. Once so defined the job is scheduled by the manager via test 850. The start date is entered at block 860 and the work schedule delineated accordingly by the system, block 870. If this schedule has unanticipated conflicts, these are accounted for with test 880 and block 890.

After completion of the pattern structure, each job must be validated in the context of the system operation. For example, some jobs may require the same resources causing a system conflict. The validation process is entered with a positive response to test 892, branching logic to the validation loop beginning at block 894. In this loop, a series of tests are performed on potentially conflicting parameters in a job. In this flowchart, two tests are exemplified; Time(J), test 896 and Resource(J) test 898. As depicted herein, these tests are only simple comparisons to preset maximums; more complex tests regarding personnel scheduling, computer time, warehouse availability, etc. may be implemented as needed.

A validated job is then quantified by the manager in terms of financial impact, test 900. Each Task(J) in the pattern is given its financial code value, FC(J) at blocks 910 and 920. As work on the job progresses, the manager may monitor the work in progress, WIP(J) via test 930 and blocks 940-950.

An important element of system control resides in the requisite entry of authorization by levels of management. For example, the acceptance of a customer order in excess of $1000 may require a manager's approval. The present system identifies this approval as an I/0 or "phi" for the next step in processing; without receipt of this approval by the appropriate manager, progress on the job is stalled. This is presented in logic format via test 960. A positive response thereto initiates the authorization process, wherein the request is transmitted to the manager at the proper authorization level, blocks 970 and 980. If granted at test 990, logic proceeds in course; otherwise an alarm is triggered, block 1000, and work is halted.

System delays are tracked via test 1010; identified delays from scheduled events shift the logic to block 1020. (Note that at any time work is delayed, the delay reasons are so recorded.) This permits management entry of adjustments to the schedule, block 1030 and the storage of delay reasons for future consideration, block 1040. As the job progresses and is integrated with other jobs, the system permits the creation of reports on performance, costs, etc. This is done via a positive response to test 1050. At block 1060, the form of report is selected and the system then collects the salient data. Once reduced to the report form selected, the report is transmitted to the designated output device, block 1070. The various information about the behavior of the jobs is stored in the memory of an artificial intelligence engine (block 1075) to be used by the system in suggesting modifications to the jobs or to the patterns.

The above presentation has been based on a hierarchial procession; this form is used merely to facilitate understanding of the concepts involved. In implementation, other non-hierarchial structures such as a menu driven command structure, may be substituted without loss of fidelity to the underlying concepts.

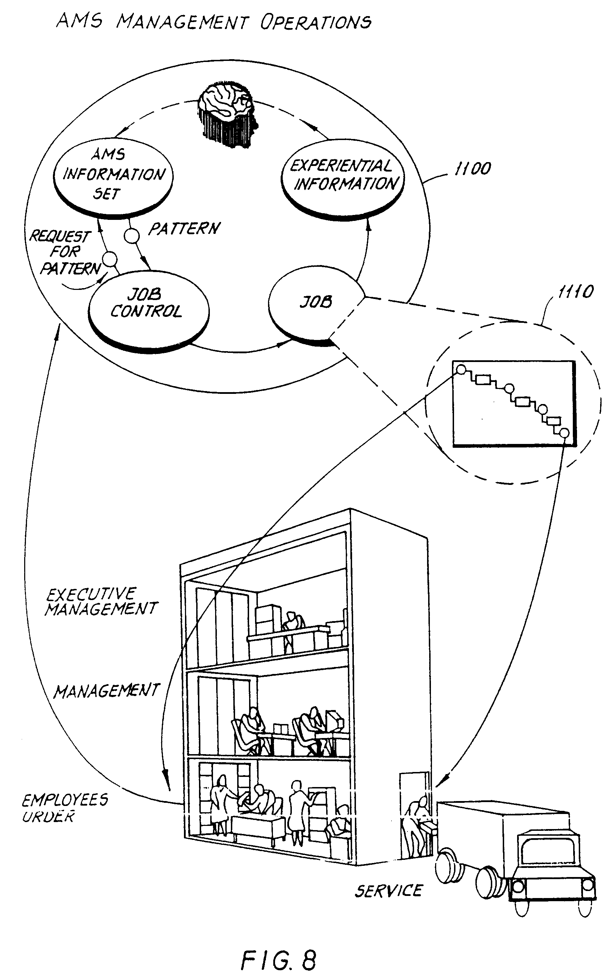

Turning now to Figure 8, the cyclic growth and enhancement of the stored activity patterns as implemented as system jobs is graphically presented. In this diagram, the manager's request for a job initiates the process 1100, to be completed by the manager's review of the performance on the job and any ensuing adjustments 1110 to the AMIS pursuant to this performance.

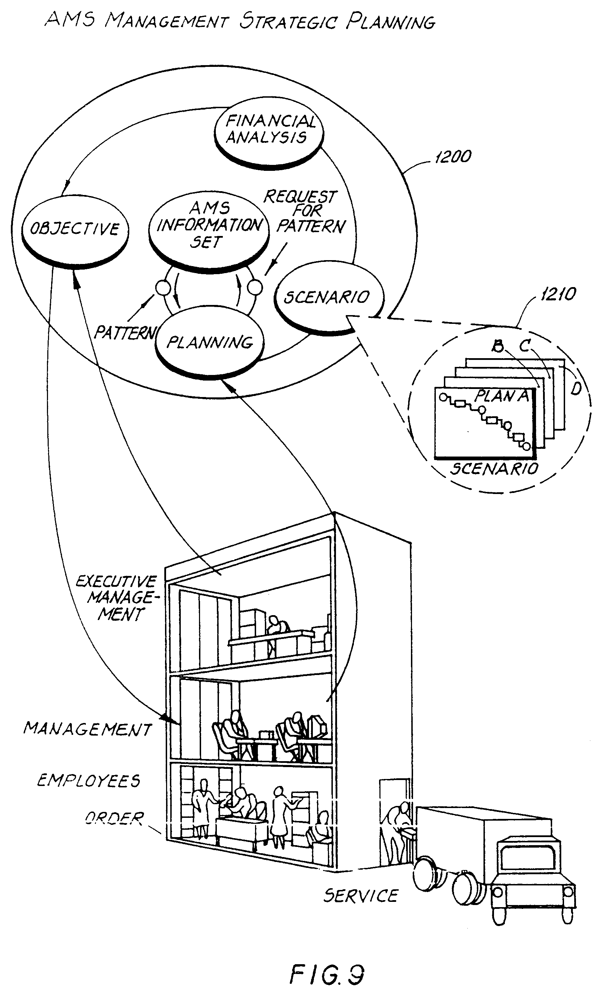

Turning now to Figure 9, a similar process is presented for planning, based on objectives from executive management. In this diagram, these objectives 1200 are converted by the managers into a series of proposed patterns or scenarios 1210. The financial values stored with the current AMIS are then used to project impact based on the various plans, allowing a judicious choice of corporate direction.

The above-described arrangement is merely illustrative of the principles of the present invention. Numerous modifica-tions and adaptations thereof will be readily apparent to those skilled in the art without departing from the spirit and scope of the present invention.

## Claims

1. In combination in a data processing system for the integrated management of an organization comprising; data input means for receiving organization parameters associated with a set of operative characteristics for said organization and arranging said parameters into a matrix of values forming an activity management information set (AMIS) ; data processing means for selective entry of said parameters into discrete activity patterns wherein said patterns represent linkages of tasks that taken together form a work flow of said organization and are based on the organization policies and procedures; and a distributed network of data processing stations for communicating I/O (phi) values between stations in accordance with an implementation of said activity patterns.

2. The system of claim 1 further comprising a second data processing means for receiving historical trend data on activity performance and determining adjustment factors for said patterns to increase pattern implementation efficiencies.

3. The system of claim 1 wherein said data processing means includes a plurality of response centers interconnected for information transfer and linked to a central controller for monitoring and execution of jobs corresponding to said activity patterns.

4. The system of claim 1 wherein said organization parameters include tasks, operations, resources, and linking I/O values.

5. The system of claim 1 wherein said activity patterns are formed by a series of linked activities each with an input phi, a response center, and an output phi and nexus elements.

6. The system of claim 5 wherein said response center includes an agent, financial posting information, a set of governing policies and procedures and at least one work unit.

7. A method of managing an organization work flow wherein organization objectives are realized by the performance of activities linked into discrete patterns as implemented on an integrated network of data softwares, comprising the steps of;

a) collecting past procedures and operative techniques of an existing organization and entering these into a database AMIS forming a set of parameters;

b) identifying a set of work cycles employed by said organization and forming patterns of activities by allocating said parameters to each work cycle to conform with a current practice of said organization;

c) linking said activities by logical input/output factors to realize a systemic progression of said work flow;

d) storing said patterns in memory available for recall and real time implementation of a set of underlying tasks associated with said patterns; and

e) identifying alternative methods of carrying out the work of an organization within one pattern.

8. The method of claim 7 further comprising the steps of collecting data on real time implementation of said patterns; forming a historical trend and experience database; and modifying said patterns in response to said historical trend and experience information, thus enriching the patterns for new, different conditions.

9. The method of claim 7 further comprising the step of using said established patterns for planning future management allocations of organizational resources.

10. A programmed controlled data software formed in an integrated network of dispersed and remotely located computer response centers for the selective management of an organization's work flow, said software comprising;

an activity pattern generation module for collecting detailed data on operative characteristics of said organization and collating said data into a preestablished matrix of management parameters, said module further including means for selective construction of discrete patterns formed of tasks linked by communication paths and phi's, wherein said patterns comprise a work cycle within said organization work flow;

a management module for selective designation of stored patterns and entry of job parameters for effective implementation of said selected patterns as jobs for real time completion of said tasks associated with the selected patterns.

11. The software of claim 10, further comprising job validation means for confirming a job absent of conflicting parameters.

12. The software of claim 10, further comprising pattern approval means for selective storage of validated patterns in an accessible pattern database.

13. In a system for the enhanced operation of job related activities performed by employees of an organization, comprising:

means for storing detailed information about said organization in terms of employees, resources, assets, activities, work cycles, and interconnecting communication links forming a matrix of patterns unique to said organization;

means for distributing detailed assignments to said employees of said organization wherein said assignments correspond to the patterns forming the work cycle and said assignments are delivered to said employees in timed relationship in accordance with said patterns;

means for receiving progress reports on a measure of completeness of said activities, wherein said activities are linked to insure the initiation of a subsequent activity upon completion of all previous activities forming inputs to said subsequent activity in accordance with said pattern; and

means for compiling and analyzing the progress reports forming a second performance database accessible for evaluation and planning functions.

14. The system of claim 13 further comprising linking means to an MIS database providing information on current and future opportunities for said organization. Thus, paving the way for the construction of one comprehensive system instead of the now separate Management Information Systems.

15. The system of claim 14 wherein the means for compiling and analyzing the progress reports further comprises forecasting means wherein current performance is applied to projections on future opportunities to forecast future performance and future resource requirements for said organization, within its environment expressed by the parameters of the environment.

16. The system of claim 13 further comprising means for determining costs associated with said patterns and work cycles and individual phi's, and further, determining cost flows for said organization on a pattern basis.

17. The system of claim 13 wherein said performance database is linked to an accounting system and quality control system associated with said organization.

AMS

FIG. 1

START — 100

NEW ORGANIZATION — 110

YES

SET: COMPANY PARAMETERS — 120

NO — 140

RECALL: COMPANY PARAMETERS

STORE: COMPANY PARAMETERS — 130

CHANGE COMPANY PARAMETERS ? — 150

YES

UPDATE: COMPANY PARAMETERS — 160

PATTERN CREATION ? — 190

YES

FOR J = 1, m — 200

SET: TASK (I, J) — 210

SET: AGENT (I, J) — 220

SET: TIME (I, J) — 230

SET: RESOURCE (I, J) — 240

SET: I/O (I, J) — 250

NEXT J

FIG. 2A

FIG. 2B

12

ACTIVITY CONSTITUENTS

FIG. 3A

WORK UNIT

I/O WORK UNIT

ELEMENTS
POLICIES & PROCEDURES

FINANCIAL VALUE'S
POSTING INFORMATION

AGENT

Φ    Phi

EP 0 577 324 A2

ACTIVITY PATTERN DIAGRAM

Phi

RESPONSE CENTER

FIG. 3B

EP 0 577 324 A2

# SALES ORDER WORK CYCLE

SALES · ORDER PROCESSING · WAREHOUSE · SHIPPING · ACCOUNTING

SALES SYSTEM · ORDER PROCESSING SYSTEM · WAREHOUSE SYSTEM · A/R SYSTEM

C.O.G.S = $650
SALES ORDER VALUE = $1200

FIG. 4A

FINANCIAL TRANSACTION

EP 0 577 324 A2

FIG. 4B

ACTIVITY PATTERN DIAGRAM

PRODUCT DISTRIBUTION

SHIP BY AIR SUBPATTERN

610

PRODUCT

CUSTOMER WORK ORDER

PICK LIST

PACKAGE PRODUCT

PACKAGED PRODUCT

AIR FREIGHT DOCUMENTS

SHIPPING DOCUMENTS

620

SHIP PRODUCT

SHIPMENT

AIR FREIGHT DOCUMENTS

SHIPPING DOCUMENTS

ELEMENTS:
VERIFY ORDER
CREATE PACKAGING LIST

ELEMENTS:
CONTRACT SHIPPER
TRANSFER PRODUCT TO SHIPPER
CONTRACT AIR

FUNCTIONS:
SIGN SHIPPING DOCUMENTS
SIGN AIR FREIGHT DOCUMENTS

FIG. 5

ACTIVITY PATTERN DIAGRAM

PRODUCT
DISTRIBUTION

SHIP BY LAND SUBPATTERN

PRODUCT

PACKAGED PRODUCT

CUSTOMER
WORK ORDER

PACKAGE
PRODUCT

PICK LIST

SHIPPING
DOCUMENTS

SHIP
PRODUCT

SHIPMENT

SHIPPING
DOCUMENTS

ELEMENTS:
VERIFY ORDER
CREATE PACKING LIST

ELEMENTS:
CONTRACT SHIPPER
TRANSFER PRODUCT TO SHIPPER

FUNCTIONS:
SIGN SHIPPING DOCUMENTS

FIG 6

ACTIVITY PATTERN DIAGRAM

START 800

JOB ? — 810

YES

NO

ACCESS: PATTERN — 820

ENTER: JOB PARAMETERS — 830

ENTER: SUBPATTERNS — 840

SCHEDULE JOB — 850

YES

ENTER: START DATA — 860

ACCESS: SCHEDULE — 870

ADJUST ? — 880

YES

ENTER: CHARGES — 890

FIG. 7A

FIG. 7B

892 — VALIDATE JOB — YES → 894 — FOR J = I , M → 896 — TIME (I , J) < T MAX — NO → 898 — RESOURSE(I,J) < R MAX — NO → GO TO 892

900 — FINANCIAL VALUES ? — YES → 910 — SELECT : TASK ( J ) → 922 — SET : FC ( J )

930 — DISPLAY WIP (J) — YES → 910 — RECALL : WIP ( J ) → 950 — DISPLAY : WIP ( J )

AUTHORIZATION
REQUIRED
?

960

YES

970 — IDENTIFY: LEVEL

980 — TRANSMIT: REQUEST

990

GRANTED
?

NO

ALARM

1000

YES

DELAY
?

1010

YES

1020

DISPLAY: SCHEDULE

1030 — ENTER: MODIFICATIONS

1040 — STORE: DELAY REASONS

FIG. 7C

21

FIG. 7D

AMS MANAGEMENT OPERATIONS

FIG. 8

AMS MANAGEMENT STRATEGIC PLANNING

FIG.9

24